# EUROPÄISCHE PATENTANMELDUNG

(11) **EP 3 954 438 A1**
(43) Veröffentlichungstag der Anmeldung: **16.02.2022**
(21) Anmeldenummer: 20190686.4
(22) Anmeldetag: 12.08.2020
(51) Int. Cl.: A62B 23/02, A41D 13/11, B01D 39/16, B01D 46/10

(54) **VERFAHREN ZUR HERSTELLUNG EINER ATEMSCHUTZMASKE**

(71) Anmelder: Eurofilters Holding N.V., 3900 Overpelt (BE)
(72) Erfinder: Sauer, Ralf, 3900 Overpelt (BE); Schultink, Jan, 3900 Overpelt (BE)
(74) Vertreter: Grünecker Patent- und Rechtsanwälte PartG mbB

(57) **Zusammenfassung**

Die Erfindung betrifft ein Verfahren zur Herstellung einer Atemschutzmaske umfassend ein Filtermaterialstück aus einem luftdurchlässigen Material, mit den Schritten. Bereitstellen eines ersten Vliesstoffmaterials, bereichsweises Verdichten des ersten Vliesstoffmaterials, Verschweißen des ersten Vliesstoffmaterials mit einem zweiten Vliesstoffmaterial im verdichteten Bereich.

## Beschreibung

Die Erfindung betrifft eine Atemschutzmaske.

Atemschutzmasken bedecken regelmäßig Mund und Nase des Trägers mit einem Filtermaterial und dienen zu dessen Schutz vor in der Luft enthaltenen Schadstoffen und zum Schutz der Umgebung vor ausgeatmeten Bakterien und Viren. Insofern umfasst der Begriff unter anderem insbesondere einen Mund-Nasen-Schutz, medizinische Gesichtsmasken und filtrierende Halbmasken.

Das verwendete Filtermaterial besteht heutzutage im Allgemeinen aus einem Vliesstoff, der aus Kunststoff hergestellt wird. Viele Atemschutzmasken sind für den Einmalgebrauch gedacht und werden danach entsorgt.

Bei der Herstellung bzw. Konfektionierung der Atemschutzmasken werden regelmäßig mehrere Lagen eines Vliesstoffs miteinander verbunden, häufig verschweißt. Auch wenn die Verbindung der Vliesstofflagen keiner besonders hohen Beanspruchung ausgesetzt sind, müssen sie doch gewisse Mindestreißkräfte beschädigungsfrei aushalten.

Gleichzeitig ist es aufgrund der steigenden Nachfrage nach Atemschutzmasken nötig, diese effizient in großen Stückzahlen herstellen zu können.

Daher besteht die der Erfindung zugrundeliegende Aufgabe darin, ein Herstellungsverfahren für Atemschutzmasken bereitzustellen, das eine effiziente Fertigung großer Stückzahlen bei zuverlässiger Stabilität der Atemschutzmasken ermöglicht.

Diese Aufgabe wird durch den Gegenstand des Anspruchs 1 gelöst.

Erfindungsgemäß wird ein Verfahren zur Herstellung einer Atemschutzmaske umfassend ein Filtermaterialstück aus einem luftdurchlässigen Material bereitgestellt, mit den Schritten.

Bereitstellen eines ersten Vliesstoffmaterials,
bereichsweises Verdichten des ersten Vliesstoffmaterials,

Verschweißen des ersten Vliesstoffmaterials mit einem zweiten Vliesstoffmaterial im verdichteten Bereich.

Damit wird der Bereich, in dem die beiden Vliesstoffmaterialien verschweißt werden, also im (späteren) Schweißbereich, vorab verdichtet bzw. vorverdichtet. Es hat sich herausgestellt, dass ein derartiges zweistufiges Verbindungsverfahren eine hohe mechanische Festigkeit bei kurzen Verschweißzeiten ergibt. Somit ermöglicht dieses Verfahren hohe Taktzahlen bei der Herstellung ohne Einbußen bei der Festigkeit der Schweißverbindungen.

Mit dem Verschweißen der Vliesstoffmaterialien wird das Filtermaterialstück aus luftdurchlässigem Material der Atemschutzmaske erhalten. Das Filtermaterialstück bildet den Filterteil der Atemschutzmaske, mit dem die ein- und ausgeatmete Luft gefiltert wird.

Im Sinne der vorliegenden Erfindung bezeichnet ein "Vliesstoff" ein Wirrgelege, das einen Verfestigungsschritt (Vliesbindeschritt) durchlaufen hat, so dass es eine ausreichende Festigkeit aufweist, um insbesondere maschinell (also in industriellem Maßstab) zu Rollen auf- bzw. abgewickelt zu werden. Die für ein derartiges Aufwickeln minimal erforderliche Bahnspannung beträgt 0,044 N/mm. Die Bahnspannung sollte nicht höher als 10 % bis 25 % der Mindesthöchstzugkraft (gemäß DIN EN 29073-3:1992-08) des aufzuwickelnden Materials betragen. Daraus resultiert eine Mindesthöchstzugkraft für ein aufzuwickelndes Material von 8,8 N pro 5 cm Streifenbreite.

Ein "Faservlies" (oder kurz nur "Vlies" genannt) entspricht einem Wirrgelege, das jedoch keinen Verfestigungsschritt durchlaufen hat, so dass im Gegensatz zu einem Vliesstoff ein derartiges Wirrgelege keine ausreichende Festigkeit aufweist, um zum Beispiel maschinell zu Rollen auf- bzw. abgewickelt zu werden.

Der Begriff "Vliesstoff" ("Nonwoven") wird in anderen Worten gemäß der Definition nach ISO Standard ISO 9092:1988 bzw. CEN Standard EN 29092 verwendet. Details zur Verwendung der darin beschriebenen Definitionen und/oder Verfahren lassen sich auch dem Lehrbuch "Vliesstoffe", H. Fuchs, W. Albrecht, WILEY-VCH, 2012, entnehmen.

Unter "Fasern" werden sowohl Fasern endlicher Länge (bspw. Stapelfasern) als auch Fasern theoretisch unendlicher Länge, d.h. Endlosfasern oder Filamente, verstanden.

Vor dem Verschweißen der beiden Vliesstoffmaterialien kann das zweite Vliesstoffmaterial bereichsweise verdichtet werden. Grundsätzlich ist es nicht erforderlich, beide miteinander zu verbindenden Vliesstoffmaterialien vorzuverdichten. Allerdings führt dies zu einer weiteren Verbesserung der Festigkeit bzw. einer weiteren möglichen Verkürzung der Verschweißzeit. Beim Verschweißen liegen dann die verdichteten Bereiche der beiden Vliesstoffmaterialien vorzugsweise über- bzw. aufeinander.

Das Verdichten kann durch Ultraschallschweißen, thermisches Schweißen oder durch Druckbeaufschlagung erfolgt. Die Druckbeaufschlagung kann dabei insbesondere ohne weiteren Energieeintrag bspw. in Form von Ultraschall- oder thermischer Energie, also bei Raumtemperatur erfolgen.

Das Verschweißen der Vliesstoffmaterialien kann mittels Ultraschallschweißen oder thermischem Schweißen erfolgt.

Der Bereich in dem bereichsweise verdichtet wird (Vorverdichtbereich) kann die gleichen Abmessungen, insbesondere in der Ebene des Vliesstoffmaterials, wie der (spätere) Schweißbereich haben. Vorzugsweise kann der Vorverdichtbereich größer als der Schweißbereich sein. Damit kann sichergestellt werden, dass trotz Toleranzen in den Prozessparametern das Verschweißen in dem vorverdichteten Bereich stattfindet, dass also beispielsweise die Ultraschallsonotrode für das Verschweißen den vorverdichteten Bereich trifft.

Die beiden Vliesstoffmaterialien können zusammenhängend ausgebildet sind. Dabei können sie als ein gemeinsames Vliesstoffmaterialstück ausgebildet sein. In diesem Fall erfolgt das Verschweißen nach einem Falten bzw. Zusammenlegen des einen gemeinsamen Vliesstoffstoffmaterialstücks. Dabei werden, falls beide Vliesstoffmaterialien bereichsweise verdichtet werden, die verdichteten Bereiche auf- bzw. übereinandergelegt.

Gemäß einer Alternative können die beiden Vliesstoffmaterialien als separate oder getrennte Materialstücke ausgebildet sein.

Bei einer Ausbildung in Form eines zusammenhängenden Vliesstoffmaterialstücks kann das bereichsweise Verdichten beider Vliesstoffmaterialien vor oder nach einem Falten bzw. Zusammenlegen des einen Vliesstoffmaterialstücks erfolgen.

Das erste und/oder das zweite Vliesstoffmaterial können einlagig oder mehrlagig ausgebildet sein.

Jede Lage des ersten bzw. zweiten Vliesstoffmaterials kann ein Vliesstoff oder ein Faservlies sein. Ein Faservlies wird häufig gemeinsam mit einer oder mehreren Vliesstofflagen in einem mehrlagigen Verbund oder Laminat eingesetzt. Ein mehrlagiges Vliesstoffmaterial kann aber auch nur Vliesstofflagen umfassen.

Bei einem mehrlagigen Aufbau eines Vliesstoffmaterials können die Lagen entlang der Kanten des Vliesstoffmaterials (in der zugeschnittenen Form des Filtermaterialstücks) umlaufend miteinander verschweißt sein.

Bei den Vliesstoffen kann es sich um trockengelegte, nassgelegte oder Extrusionsvliesstoffe handelt. Demzufolge können die Fasern der Vliesstoffe endliche Länge aufweisen (Stapelfasern), aber auch theoretisch unendliche Länge aufweisen (Filamente). Die Vliesstofflagen können beispielsweise ein Meltblown-, Spunbond- und/oder ein Spun-Blown-Vliesstoff sein. Es kann sich auch um einen Nanofaservliesstoff (z.B. elektrogesponnen oder extrudiert) handeln. Eine spezifische Wahl der einzelnen Vliesstoff- und deren Parameter ermöglicht eine kontrollierte Einstellung der Filtereigenschaften der Atemschutzmaske.

Der Begriff "Nanofaser" wird gemäß der Terminologie der DIN SPEC 1121:2010-02 (CEN ISO/TS 27687:2009) verwendet.

Das erste Vliesstoffmaterial und/oder das zweite Vliesstoffmaterial können ein dreilagiges Laminat aus einem Meltblown-Vliesstoff zwischen zwei Lagen eines Spunbond-Vliesstoffs sein. Ein derartiges SMS-Laminat weist exzellente Filtrationseigenschaften bei hoher Stabilität auf.

Das erste und/oder das zweite Vliesstoffmaterial können Fasern aus einem frischen Kunststoff und/oder aus einem rezyklierten Kunststoff umfassen oder daraus bestehen.

Neben (auch reinem oder virgin genannten) Kunststoffmaterial (Primär-Material), wie beispielsweise virgin PP, können Fasern des Vliesstoffs oder Faservlieses also auch aus einem rezyklierten Kunststoff, wie beispielsweise rPP, gebildet bzw. hergestellt sein. In letzterem Fall werden die Fasern also aus dem rezyklierten Kunststoff gesponnen.

Rezyklierte Kunststoffe sind also Kunststoffe, die bereits in Verwendung waren und durch entsprechende Recycling-Verfahren wiedergewonnen wurden (Sekundär-Material). Die resultierenden Atemschutzmasken sind in ökologischer Hinsicht vorteilhaft, da sie in hohem Maße rohstoffneutral hergestellt werden können.

Der rezyklierte Kunststoff kann dabei aus der Gruppe bestehend aus rezyklierten Polyestern, insbesondere rezykliertem Polyethylenterephthalat (rPET), rezykliertem Polybutylenterephthalat (rPBT), rezyklierter Polymilchsäure (rPLA), rezykliertem Polyglycolid und/oder rezykliertem Polycaprolacton; rezyklierten Polyolefinen, insbesondere rezykliertem Polypropylen (rPP), rezykliertem Polyethylen und/oder rezykliertem Polystyrol (rPS); rezykliertem Polyvinylchlorid (rPVC), rezyklierten Polyamiden sowie Mischungen und Kombinationen hiervon ausgewählt sei.

Für viele Kunststoff-Rezyklate bestehen einschlägige internationale Normen. Für PET-Kunststoff-Rezyklate ist beispielsweise die DIN EN 15353:2007 einschlägig. PS-Rezyklate werden in DIN EN 15342:2008 näher beschrieben. PE-Rezyklate werden in DIN EN 15344:2008 behandelt. PP-Rezyklate werden in DIN EN 15345:2008 charakterisiert. PVC-Rezyklate sind in DIN EN 15346:2015 näher bezeichnet. Zum Zwecke der entsprechenden speziellen Kunststoffrezyklate macht sich die vorliegende Patentanmeldung die Definitionen dieser internationalen Normen zu Eigen. Die Kunststoff-Rezyklate können dabei aus metallisierten oder nicht metallisierten Rohstoffen gewonnen sein. Ein Beispiel für nicht metallisierte Rohstoffe sind aus PET-Getränkeflaschen zurückgewonnene Kunststoffflakes oder -chips. Ebenso können die Rohstoffe metallisiert sein, z.B. wenn sie aus metallischen Kunststofffolien erhalten wurden, insbesondere metallisierten PET-Folien (MPET).

Bei dem rezyklierten Kunststoff handelt es sich insbesondere um rezykliertes Polyethylenterephthalat (rPET), das beispielsweise aus Getränkeflaschen, insbesondere aus sog. Bottleflakes, also Stücke gemahlener Getränkeflaschen, erhalten wurde.

Alternativ kann der rezyklierte Kunststoff rezykliertes Polypropylen (rPP) sein. Das rPP kann sowohl ein physikalisch als auch ein chemisch rezykliertes rPP Material sein. Physikalisch rezyklierte rPP Materialien werden z.B. durch physikalisches Abrennen von PP-Material aus Müll, wie Haushaltsmüll, gewonnen. Insbesondere ist es aber bevorzugt, dass das rPP Material ein chemisch rezykliertes Material ist. Dabei wird in Ausführungsformen das rPP durch Depolymerisation von "virgin" PP in Propan, Dehydrierung von Propan in Propen und anschließender Polymerisation des so hergestellten Propens hergestellt. Chemisch rezykliertes rPP-Material hat im Vergleich zu physikalisch hergestelltem rPP Material den Vorteil, dass die chemischen und mechanischen Eigenschaften wie beim "virgin" PP gezielt einstellbar sind. Insbesondere können bei chemisch rezykliertem rPP Material Eigenschaften erzielt werden, die mit denen von "virgin" PP vergleichbar sind. Auch können im Gegensatz zu physikalisch rezykliertem rPP Materialverunreinigungen vermieden werden.

Verfahren zum Herstellen von chemisch rezykliertem rPP werden in der Regel großtechnisch umgesetzt und sind im Stand der Technik bekannt. Beim Depolymerisationsprozess wird in Ausführungsformen "virgin" PP aus Kunststoffabfällen (wie z.B. Verpackungsmaterialien) oder Altöl thermisch und/oder chemisch aufbereitet und zu Propan umgewandelt. Insbesondere kann das durch Depolymerisation hergestellte Propan über die NEXBTL^{™} Technologie der Fa. Neste hergestellt werden. Beim anschließenden Dehydrierungsprozess wird das erhaltene Propan katalytisch dehydriert und zu Propen umgewandelt. Zum Beispiel kann in Ausführungsformen die Dehydrierung über den Oleflex-Prozess der Fa. UOP erfolgen. Dabei wird ein propanhaltiges Gas auf 600-700 °C vorgeheizt und in einem Fließbett-Dehydrierreaktor an einem Platin-Katalysator mit Aluminiumoxid als Träger dehydriert. Beim Polymerisationsschritt wird das Propen zu Polypropylen, d.h. rPP, polymerisiert. Dabei können herkömmliche katalytische Prozesse, wie z.B. Ziegler-Natta-Verfahren oder Metallocen-katalysierte Verfahren eigesetzt werden. Insbesondere bevorzugt ist, dass das rPP ein kommerziell erhältliches Polypropylen ist, das gemäß der Ever Minds^{™} Technologie der Fa. Borealis produziert wurde.

Die rezyklierten Kunststoffe, insbesondere das rezyklierte PET und das rezyklierte PP, sowohl in der metallisierten, als auch in der nicht metallisierten Fassung, können zu den entsprechenden Fasern versponnen werden, aus denen die entsprechenden Stapelfasern bzw. Meltblown- oder Spunbond-Vliesstoffe für die Zwecke der vorliegenden Erfindung hergestellt werden können. Die Verwendung von chemisch rezykliertem rPP hat insbesondere den Vorteil, dass es sich zu Meltblown- oder Spunbond-Vliesstoffen verarbeiten lässt, die hervorragende Eigenschaften besitzen. In diesem Zusammenhang ist zum Beispiel sehr vorteilhaft, dass Meltblown- oder Spunbond-Vliesstoffe, die aus diesem rPP Material hergestellt wurden, sich besonders günstig elektrostatisch aufladen lassen. Ein derart erhaltenes rPP-Material weist nach einer Corona-Behandlung eine hervorragende Haftung zu allen anderen Schichten/Materialien der vorliegenden Erfindung auf. Dies ist insbesondere dadurch erklärbar, dass die Aufladbarkeit und die Ladungspersistenz eines solchen rPP-basieren Materials gut sind und mit den Eigenschaften eines Materials vergleichbar sind, das aus "virgin" PP hergestellt wurde.

In einer Ausführungsform sind die Fasern eines oder mehrerer Vliesstoffe oder Faservliese, die in einem oder beiden Vliesstoffmaterialien beinhaltet sind, aus einem einzigen (virgin oder rezyklierten) Kunststoffmaterial gebildet.

Alternativ ist es jedoch ebenso möglich, wenn die Fasern eines oder mehrerer Vliesstoffe oder Faservliese aus unterschiedlichen Kunststoffen gebildet sind. Dabei kann es sich um virgin und/oder rezyklierte Kunststoffe handeln. Hierbei sind verschiedene Ausführungsformen möglich:
Einerseits kann es sich bei einer Lage eines Vliesstoffs oder Faservlieses um ein Gemisch mindestens zweier Fasertypen aus unterschiedlichen Kunststoffen handeln, beispielsweise um Fasergemische, die aus zumindest zwei unterschiedlichen (virgin und/oder rezyklierten) Kunststoffen gebildet sind.

Andererseits ist es ebenso möglich, dass der Vliesstoff oder das Faservlies Bikomponentenfasern (BiKo-Fasern) beinhaltet oder hieraus gebildet ist. Diese können aus einem Kern, sowie einem den Kern umhüllenden Mantel bestehen. Kern und Mantel sind dabei aus unterschiedlichen Kunststoffen gebildet. Neben Kern/Mantel-Bikomponentenfasern kommen auch die anderen gebräuchlichen Varianten von Bikomponentenfasern (z. B. Side by Side) in Frage.

Die Bikomponentenfasern können als Stapelfasern vorliegen oder als Extrusionsvliesstoff (beispielsweise als Meltblown-, Spunbond- oder Spun-blown-Vliesstoff) ausgebildet sein, so dass die Bikomponentenfasern theoretisch unendliche Länge aufweisen und sogenannte Filamente darstellen. Bei derartigen Bikomponentenfasern ist es möglich, dass der Kern aus einem rezyklierten Kunststoff gebildet ist, für den Mantel kann beispielsweise auch ein Virgin-Kunststoff, aber alternativ ebenso ein anderer rezyklierter Kunststoff eingesetzt werden. Alternativ können auch Kern und Mantel aus einem virgin-Kunststoff sein.

Eine Option sind Bikomponentenfasern, deren Kern aus rezykliertem Polyethylenterephthalat (rPET) oder rezykliertem Polypropylen (rPP) besteht, die Hülle besteht dabei aus Polypropylen, bei dem es sich um "virgin" oder ebenso um ein rezykliertes Material handeln kann.

Wenn die Bikomponentenfasern im Meltblown vorliegen, ist der Mantel vorzugsweise aus virgin Material, um zuverlässig persistent elektrostatisch aufladbar zu sein.

Eine oder mehrere der Vliesstofflagen eines oder beider Vliesstoffmaterialien können elektrostatisch aufgeladen sein. Das elektrostatische Aufladen der Vliesstofflage kann durch Coronaladung oder Hydrocharging erfolgen. Insbesondere Fasern, die aus dem oben beschriebenen chemisch rezyklierten rPP-Material gebildet, also schmelzgesponnen wurden, erlauben damit eine ökologisch vorteilhafte Ausführungsform bei exzellenten Filtereigenschaften.

Bei den beschriebenen Herstellungsverfahren kann das bereichsweise Verdichten und/oder das Verschweißen mit einer Sonotrode und einem Amboss durchgeführt werden, wobei die Sonotrode und/oder der Amboss eine glatte oder eine strukturierte Oberfläche aufweisen. Für den Verschweißschritt hat sich insbesondere eine Strukturierung (Hoch-Tief-Struktur) der Sonotrode und/oder des Ambosses, so dass die Oberfläche also reliefiert ist, als vorteilhaft herausgestellt. Zum bereichsweisen Verdichten ist insbesondere eine glatte Oberfläche auf Sonotrode und Amboss von besonderem Vorteil.

Vor dem Verschweißen kann bereichsweise, insbesondere auf dem verdichteten Bereich, ein thermisch reaktivierbarer Klebstoff aufgebracht werden. Bei dem thermisch reaktivierbaren Klebstoff kann es sich um einen Hotmelt oder Schweißlack handeln. Auch hier entspricht der Bereich des bereichsweisen Aufbringens dem (späteren) Schweißbereich.

Nach dem Verdichten bzw. vor dem Verschweißen kann der Klebstoff erkalten. Durch das Verschweißen würde dann der Klebstoff reaktiviert werden, indem er aufgeschmolzen wird. Die Verwendung eines reaktivierbaren Klebstoffs erlaubt, die benötigte Schweißtemperatur niedriger zu wählen, da ggf. nur der Schmelzpunkt des Klebstoffs erreicht werden muss, der typischerweise niedriger ist als der der Fasern.

Der Klebstoff kann mittels einer Rolle oder einer Düse aufgebracht werden.

Die Herstellungsverfahren können weiterhin ein Anbringen eines Befestigungsbands an dem Filtermaterialstück umfassen, wobei das Anbringen ein Verschweißen des Befestigungsbands mit dem Filtermaterialstück umfasst.

Das Anbringen des Befestigungsbands kann ein bereichsweises Verdichten des Befestigungsbands und/oder des Filtermaterialstücks umfassen und ein Verschweißen des Befestigungsbands mit dem Filtermaterialstück im verdichteten Bereich. Damit kann auch hier das zweistufige Verfahren eine Erhöhung der Taktzahl bei guter Festigkeit bewirken.

Das wenigstens eine Befestigungsband kann eine Lage aus einer Folie und/oder eine Lage eines Vliesstoffs, beispielsweise eines Meltblowns, umfassen oder hieraus bestehen. Der Vliesstoff und/oder das Laminat aus den beiden Lagen kann ein gekrimptes Material sein (z.B. mittels des Micrex-Mikro-Krepp-Verfahrens erhalten). Alternativ oder zusätzlich kann als Material für den Vliesstoff Vistamaxx (Hersteller: ExxonMobil Chemical) verwendet werden.

Das wenigstens eine Befestigungsband kann mehrlagig aufgebaut sein, wobei das Befestigungsband eine Lage aus einer Folie und eine Lage eines Vliesstoffs, insbesondere eines Meltblowns, umfasst oder hieraus besteht.

Bei einem Befestigungsband in Form eines Laminats umfassend eine Folie und einen Vliesstoff kann die Folie, insbesondere in Form einer Gießfolie, direkt auf den Vliesstoff auflaminiert sein. Damit ist kein zusätzlicher Klebstoff erforderlich.

Das wenigstens eine Befestigungsband kann ein thermoplastisches Polymer, insbesondere ein virgin oder ein rezykliertes thermoplastisches Polymer, umfassen oder hieraus gebildet sein. Das thermoplastische Polymer kann insbesondere ein thermoplastisches Elastomer sein. Es kann sich beispielsweise um thermoplastisches Polyurethan (TPU) oder um Vistamaxx handeln. So kann das Befestigungsband in Form eines Laminats aus einer TPU-Folie und einem TPU-Meltblown, TPU-Spunbond oder TPU Spun-blown ausgebildet sein. Dieser Aufbau ergibt eine gute Elastizität bei hoher Stabilität des Befestigungsbands. Außerdem kann ein solches Befestigungsband in vorteilhafter Weise mit dem Filtermaterialstück verschweißt werden.

Das Befestigungsband kann zu einer Kordel gedreht oder verdrillt ausgebildet sein. Dies erhöht den Tragekomfort. Dabei ist es möglich, die Verdrillung durch eine thermische Fixierung (z. B. Ultraschallschweißung) daran zu hindern, sich wieder zurückzudrehen.

Die beschriebenen Atemschutzmasken können (genau) zwei Befestigungsbänder umfassen.

Ein oder mehrere Befestigungsbänder können derart ausgebildet sein, um den Hinterkopf eines Trägers (Nutzers) geführt zu werden. Alternativ können ein oder mehrere Befestigungsbänder derart ausgebildet sein, um ein Ohr eines Trägers (Nutzers) geführt zu werden.

Das wenigstens eine Befestigungsband kann als geschlossenes Band ausgeführt sein. Dies bedeutet, dass das entsprechende Befestigungsband kein loses oder offenes Ende aufweist. Dies kann beispielsweise dadurch erreicht werden, dass beide Enden eines Befestigungsbands mit dem Filterteil bzw. dem Filtermaterialstück verbunden sind. Alternativ kann beispielsweise das entsprechende Band als solches geschlossen ausgeführt sein; es kann also eine Ring- oder Schlaufenform aufweisen.

Gemäß einer Alternative kann die Atemschutzmaske wenigstens zwei, insbesondere vier Befestigungsbänder mit offenem bzw. losem Ende aufweisen. Dies bedeutet, dass jeweils (nur) ein Ende jedes Befestigungsbands an dem Filterteil bzw. einem Vliesstoffmaterial befestigt ist. Die offenen/losen Enden von jeweils zwei Befestigungsbändern lassen sich verknoten.

Die mit dem Verfahren herzustellende Atemschutzmaske kann eine Halbmaske sein. Damit bedeckt sie im Gebrauch Nase, Mund und Kinn des Trägers. Die Atemschutzmaske kann eine medizinische Gesichtsmaske gemäß der DIN EN 14683:2019+AC:2019 oder als filtrierende Halbmaske gemäß der DIN EN 149 sein.

Die Erfindung stellt weiterhin eine Atemschutzmaske erhalten durch ein Verfahren nach einem der vorangegangenen Ansprüche bereit.

Die vorliegende Erfindung wird anhand der nachfolgenden beispielhaften Ausführungen unter Bezugnahme auf die Figuren näher beleuchtet, ohne die Erfindung auf die speziellen dargestellten Ausführungen zu beschränken. Dabei zeigen
- Fig. 1: schematisch eine Atemschutzmaske,
- Fig. 2: eine schematische Querschnittsansicht des Aufbaus eines Filtermaterialstücks einer Atemschutzmaske,
- Fig. 3: eine schematische Draufsicht auf eine Atemschutzmaske,
- Fig. 4: eine schematische Seitenansicht eines Filterteils einer Atemschutzmaske.

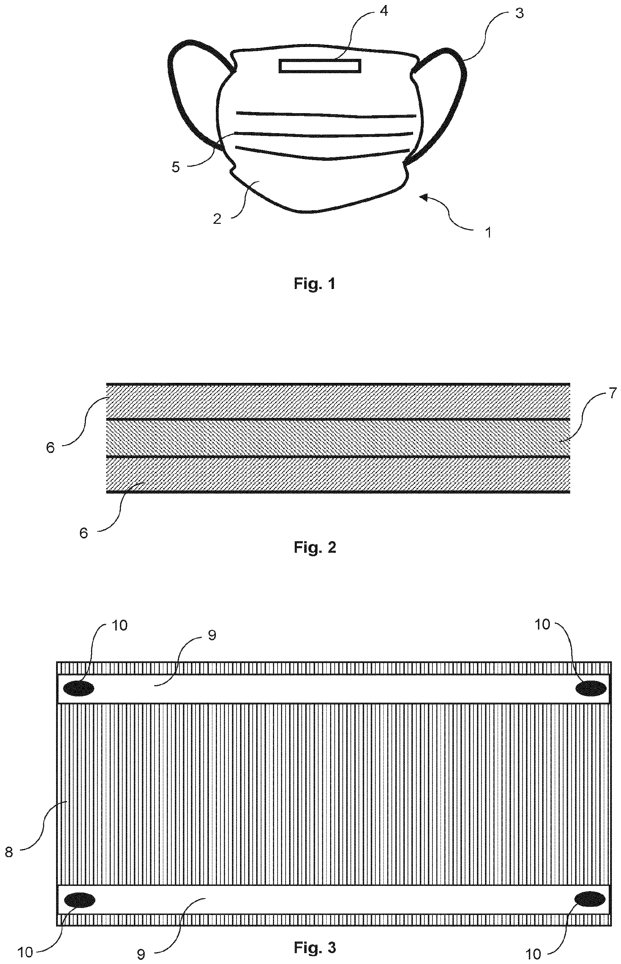

Figur 1 zeigt eine schematische Ansicht einer Atemschutzmaske 1 in Form einer Halbmaske. Es handelt sich hierbei um ein Beispiel einer medizinischen Gesichtsmaske. Die dargestellte Atemschutzmaske 1 umfasst ein Filtermaterialstück bzw. Filterteil 2. Der Zuschnitt des Filtermaterialstücks ist grundsätzlich rechteckig, kann aber auch andere insbesondere polygonale Formen annehmen.

An dem Filtermaterialstück 2 sind in dem gezeigten Beispiel zwei Befestigungsbänder 3 befestigt. Bei der Illustrierten Ausführungsform sind die Befestigungsbänder zur Befestigung an den Ohren des Trägers vorgesehen.

Zur besseren Anpassung an die Gesichtsform weist die Atemschutzmaske einen Nasensteg 4 auf, der nicht-zerstörungsfrei oder zerstörungsfrei lösbar mit dem Filtermaterialstück verbunden ist. Es kann sich insbesondere um einen in einem Kunststoffmaterial eingebetteten Draht handeln.

Eine nicht-zerstörungsfreie Verbindung besteht beispielsweise in einem Verschweißen. Dies kann entweder kontinuierlich über die gesamte Länge des Nasenstegs oder an einzelnen diskreten Punkten sein. Alternativ kann der Nasensteg mit dem Filtermaterialstück verklebt sein. Hierfür kann beispielsweise ein Hotmelt verwendet werden, was typischerweise ebenfalls zu einer nicht-zerstörungsfreien Verbindung führt.

In dem Ausführungsbeispiel sind in den Filterteil bzw. das luftdurchlässige Material 2 drei Falten 5 eingebracht.

In der schematischen Querschnittsansicht der Figur 2 ist der Aufbau eines Filtermaterialstücks für eine Atemschutzmaske illustriert. Zwischen zwei Stützlagen 6 ist eine Feinfilterlage 7 angeordnet. Die drei Lagen dieses Vliesstoffmaterials können insbesondere entlang der Kanten, also des Umfangs, des Filterteils 2, wie es in Figur 1 illustriert ist, miteinander verschweißt sein.

Alternativ zu dem in Figur 2 gezeigten Aufbau kann das luftdurchlässige Material der Atemschutzmaske auch weniger oder mehr Lagen umfassen. So können beispielsweise nur eine Stützlage und eine Feinfilterlage vorgesehen sein.

Die Atemschutzmasken weisen in einer Ausführungsform eine oder mehrere Lagen virgin oder rezykliertes PET- oder PP-Filamente oder virgin oder rezykliertes PET- oder PP-Stapelfasern auf. Zu den einzelnen Filterlagen:
Als Stützlagen 6 kommen insbesondere Spinnvlieslagen aus PET oder PP (virgin oder rezykliert) mit einem Flächengewicht von 5 bis 50 g/m² und einem Titer von 1 dtex bis 15 dtex in Frage. Als Rohstoff für rPET werden beispielsweise PET-Abfälle (z. B. Stanzabfälle) und sogenannte Bottleflakes, also Stücke gemahlener Getränkeflaschen verwendet. Um die unterschiedliche Färbung der Abfälle zu überdecken, ist es möglich, das Rezyklat einzufärben. Als thermisches Bindeverfahren für die Verfestigung des Spunbondvliesstoffs ist insbesondere das HELIX^{®} (Comerio Ercole) Verfahren vorteilhaft.

Als Feinfilterlagen 7 werden eine oder mehrere Lagen Meltblown aus PET oder PP (virgin oder rezykliert) mit einem Flächengewicht von jeweils 5 bis 30 g/m² eingesetzt. Manche oder alle diese Lage(n) werden elektrostatisch aufgeladen. Lagen aus rPET oder rPP können ebenfalls elektrostatisch geladen werden. Dabei ist lediglich zu beachten, dass dann keine metallisierten PET-Abfälle für die Fertigung verwendet werden. Alternativ können die Meltblownfilamente auch aus Bikomponentenfasern bestehen, bei denen der Kern bspw. aus rPET oder rPP und die Hülle aus einem Kunststoff, der sich besonders gut elektrostatisch aufladen lässt (z. B. virgin PP, PC, PET oder rPP, insbesondere chemisch rezykliert), gebildet wird.

Die Filamente oder Stapelfasern können auch aus Bikomponentenmaterialien bestehen, bei denen der Kern aus rPET oder rPP und die Hülle aus einem Kunststoff, der sich besonders gut elektrostatisch aufladen lässt (z. B. virgin PP, PC, PET oder rPP) gebildet wird.

Konkret kann das Filtermaterialstück aus einem dreilagigen luftdurchlässigen Material bestehen. Dabei ist zwischen zwei Spunbondvliesstofflagen aus virgin PET oder rPET mit einer Grammatur von 20 g/m² eine Meltblownvliesstofflage mit einer Grammatur von 20 g/m² angeordnet. Das so erhaltene SMS kann durch eine entlang der Kanten umlaufende Schweißnaht ultraschallverschweißt sein.

Das Meltblown kann durch Zusatz von Additiven und einer Wasserstrahlbehandlung (Hydrocharging), wie sie beispielsweise in der WO 97/07272 beschrieben ist, elektrostatisch geladen werden.

Alternativ kann das Meltblown eine Grammatur von 25 g/m² aufweisen und mittels einer Corona-Behandlung elektrostatisch geladen worden sein.

Das Meltblown kann aus Bikomponentenfasern bestehen, die einen Kern aus rPP und einen Mantel aus virgin PP aufweisen. Alternativ kann der Mantel auch rPP aufweisen. Dabei kann das Meltblown beispielsweise mit einer Meltblown-Maschine der Firma Hills Inc., West Melbourne, FL, USA, produziert werden. Hiermit lassen sich hohe Rezyklatanteile trotz elektrostatischer Aufladung verwirklichen.

Das SMS kann gekreppt sein. Hierfür kann insbesondere das Micrex-Mikro-Krepp-Verfahren eingesetzt werden. Rein beispielhaft wird auf die WO 2007/079502 verwiesen. Die damit erzielte Erhöhung der Oberfläche führt nicht nur zu einer weicheren Anmutung, es lässt sich auch besser der Gesichtsform anpassen und nimmt Feuchtigkeit besser auf.

Das mehrlagige luftdurchlässige Material kann mittels eines zweistufigen Verfahrens - wie oben beschrieben - verbunden werden. Dabei werden eine, mehrere oder alles Vliesstofflagen bereichsweise (im späteren Schweißbereich) vorverdichtet und dann verschweißt.

Das Verdichten kann durch Ultraschallschweißen, thermisches Schweißen oder durch Druckbeaufschlagung erfolgen. Das Verschweißen der Vliesstofflagen kann mittels Ultraschallschweißen oder thermischem Schweißen erfolgen.

Figur 3 zeigt eine schematische Draufsicht eines luftdurchlässigen Materials 8, das dem Filterteil 2 der Figur 1 entspricht. Im Vergleich mit der Figur 1 zeigt Figur 3 jedoch die Rückseite des Filterteils, also die einem Benutzer zugewandte Seite.

In dem illustrierten Beispiel sind an gegenüberliegenden Kanten des luftdurchlässigen Materials 8 jeweils ein Befestigungsband 9 angeordnet, dass sich über die gesamte Kantenlänge erstreckt. Die Befestigungsbänder können somit bei der Fertigung des Filterteils mit dem luftdurchlässigen Material mitlaufen und gemeinsam mit diesem geschnitten werden. Die Verbindung von Befestigungsband und luftdurchlässigem Material erfolgt in dem gezeigten Beispiel über jeweils einen Schweißpunkt 10 an den einander gegenüberliegenden Endbereichen jedes Befestigungsbands 9.

Für das Befestigungsband wird beispielsweise ein TPU-Laminat aus einer TPU-Folie mit einer Dicke von 20 µm bis 100 µm und einem TPU-Meltblown (Grammatur: 20 bis 80 g/m²) verwendet, das mit dem Filtermaterialstück verschweißt ist. Das eingesetzte TPU wird dabei jeweils in Form eines Kunststoffrezyklats verwendet.

Die Befestigung der Enden der Befestigungsbänder mit dem Filtermaterialstück erfolgt ebenfalls in dem oben beschriebenen zweistufigen Prozess. Zunächst wird insbesondere das Filtermaterialstück, ggf. auch die Befestigungsbänder, in den später zu verschweißenden Bereichen vorverdichtet. Hierfür wird das jeweilige Material mit Druck beaufschlagt oder mit Ultraschall behandelt. Anschließend erfolgt der eigentliche Verschweißsschritt.

Das nach dem Vistamaxx-Verfahren hergestellte PP-Material kann im Meltblown- oder Foliengieß- oder Blasfolien-Verfahren hergestellt sein und - wie beim TPU-Laminat beschrieben - laminiert worden sein.

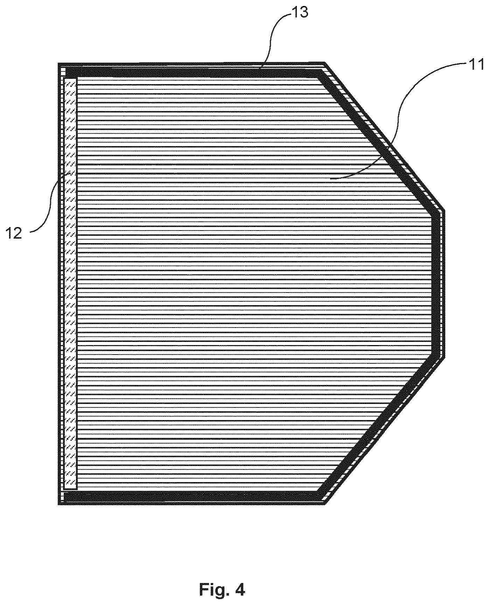

Figur 4 zeigt eine schematische Seitenansicht eines Filterteils einer Atemschutzmaske. Der Filterteil umfasst zwei Filtermaterialstücke 11, von denen in Figur 4 nur eine zu sehen ist.

Beide Filtermaterialstücke haben eine sechseckige Form und liegen passgenau aufeinander. Somit hat auch der durch die miteinander verschweißten Filtermaterialstücke 11 gebildete Filterteil als solches (in fertigem, aber unbenutztem Zustand) eine sechseckige Form.

Die Kante auf der linken Seite liegt zwischen zwei rechten Winkeln, wird also durch zwei zueinander parallele Kanten begrenzt, die auf der dazwischenliegenden Kante senkrecht stehen.

Das luftdurchlässige Material beider Filtermaterialstücke ist gekreppt. Die Krepprichtung ist auch hier durch die Schraffur angedeutet; die Kreppfalten verlaufen im bestimmungsgemäßen Gebrauch der aus dem Filterteil gefertigten Atemschutzmaske im Wesentlichen waagrecht.

Jedes der beiden Filtermaterialstücke 11 ist in Form eines SMS aufgebaut, wie es beispielsweise in Zusammenhang mit Figur 2 erläutert wurde. Die drei Lagen eines Filtermaterialstücks sind dabei zunächst entlang der Kante zwischen den beiden rechten Winkeln, auf der linken Seite in der Figur, miteinander verschweißt worden. Die entsprechende Schweißnaht 12 des gezeigten Filtermaterialstücks 11 verläuft parallel zur linken Kante.

Die Schweißnaht 13 entlang der übrigen fünf Kanten ist eine Verschweißung der beiden Filtermaterialstücke miteinander. An diesen Kanten liegt keine separate Verschweißung der SMS-Lagen eines Filtermaterialstücks als solches vor. Auf der Seite der Schweißnaht 12 hingegen sind die beiden Filtermaterialstücke nicht miteinander verschweißt. Dies bildet die offene Seite der Atemschutzmaske, die dem Gesicht des Trägers zugewandt sein wird.

Bei der Herstellung werden also zunächst die drei Lagen SMS in Form von Vliesstoffbahnen lose aufeinander gelegt und mittels der Schweißnaht 12 entlang der einen Kante verschweißt. Die übrigen fünf Kanten bleiben offen, die Lagen mithin lose. Maschinenrichtung der Fertigungsmaschine verläuft in der Anordnung der Figur 4 von oben nach unten, parallel zur Schweißnaht 12. Die nur auf einer Seite verschweißte SMS-Filtermaterialbahn wird dann gesamthaft gekreppt, wobei die Krepprichtung, also die Richtung der Kreppfalten, quer, d.h. im Wesentlichen senkrecht zur Maschinenrichtung bzw. der Schweißnaht 12, liegt.

Anschließend werden zwei derartige gekreppte SMS-Filtermaterialbahnen in Maschinenrichtung, d.h. in Richtung der bzw. parallel zur Schweißnaht 12, übereinander geführt, so dass sie aufeinander zu liegen kommen. Es erfolgt eine Verschweißung der beiden SMS-Filtermaterialbahnen, also der insgesamt sechs Lagen aus zwei SMS, entlang der Schweißnaht 13, durch die fünf Kanten der zwei übereinander liegenden Filtermaterialstücke gebildet werden. Entlang dieser Kanten werden die beiden Filtermaterialbahnen gestanzt, so dass dann ein Filterteil 11 wie in Figur 4 gezeigt erhalten wird.

Die Verschweißung der beiden SMS-Filtermaterialbahnen, also der beiden Vliesstoffmaterialien, erfolgt über den zweistufigen Prozess. Der Bereich mit dem Bezugszeichen 13 wird zunächst vorverdichtet. Das Vorverdichten erfolgt in diesem Beispiel durch Druckbeaufschlagung bei Raumtemperatur. Hierfür kann eine thermische oder Ultraschallschweißeinrichtung verwendet werden, wobei mit dieser lediglich das Vliesstoffmaterial bei Raumtemperatur zusammendrückt wird, ohne dass thermische bzw. Ultraschallenergie eingeleitet wird. Die zusätzliche Einbringung von thermischer oder Ultraschallenergie beim Vorverdichten ist ebenfalls möglich, wobei der entsprechende Gesamtenergieeintrag durch Vorverdichten und Verschweißen in Summe immer noch niedriger ist als ein einstufiges reines Verschweißen für eine Schweißnaht der gleichen Festigkeit. So ist beispielsweise die Summe aus Vorverdichtzeit und Schweißzeit niedriger als für die Erzielung der gleichen Festigkeit mit einem einstufigen reinen Verschweißschritt erforderlich wäre.

Danach kann in dem Bereich eine optionale Lage eines Hotmelts aufgebracht werden, dass dann erkalten darf. Nach dem Erkalten findet ein thermisches Schweißen statt, wobei hier nur die Schmelztemperatur des Hotmelts erreicht werden muss. Alternativ kann statt der Applikation von Hotmelt auch nur ein Ultraschallverschweißschritt stattfinden.

Der Vorverdichtbereich ist in der Ebene des Vliesstoffmaterials größer als der spätere Schweißbereich. Insbesondere kann er längs und/oder quer zur Maschinenrichtung eine größere Ausdehnung haben. Durch den größeren Vorverdichtbereich ist sichergestellt, dass die anschließende Anwendung von thermischer oder Ultraschallenergie auch bei Toleranzen in den Prozessparametern (bspw. Fluktuationen im Transportweg zwischen Vorverdichtstation und Schweißstation, Winkelversatz der Sonotrode, etc.) in den vorverdichteten Bereich fällt.

Die Zweistufigkeit des Herstellungsprozesses lässt sich beispielsweise mikroskopisch nachweisen. Eine perfekte Übereinstimmung von Vorverdichtbereich und Schweißbereich ist praktisch kaum erreichbar, so dass in Querschnittsansichten regelmäßig ein Dickensprung zwischen einem nur vorverdichteten Teilbereich und einem Schweißbereich zu sehen sind.

Die daraus resultierende Atemschutzmaske ist insbesondere auf ihrer offenen Seite, d.h. im Bereich der Schweißnaht 12 in vorteilhafter Weise dehnbar, was eine gute Gesichtsanpassung erlaubt. Daneben ist aufgrund der Kreppung auch die Luftdurchlässigkeit hoch und der Atemwiderstand niedrig.

Auch wenn in dem beschriebenen Beispiel das Filtermaterialstück aus zwei Vliesstoffmaterialien zusammengesetzt wird, ist alternativ auch die Verwendung zweier zusammenhängender Vliesstoffmaterialien in Form eines gemeinsamen Vliesstoffmaterialstücks möglich. Dieses wird an der in der Figur rechts befindlichen senkrechten Kante gefaltet, so dass dann zwei sechseckige zusammenhängende Bereiche übereinanderliegen. Der übrige zweistufige Verschweißprozess verläuft wie oben beschrieben.

Vergleichsversuche haben die Vorzüge eines derartigen zweistufigen Verbindens gezeigt. Dabei wurde ein dreilagiges Material verwendet, bei dem zwischen zwei Spunbondvliesstofflagen mit einem Flächengewicht von 35 g/m² eine Meltblownvliesstofflage mit einem Flächengewicht von 33 g/m² angeordnet wurde. Das dreilagige Material wurde als ein einziges Vliesstoffmaterialstück für Herstellung der Maske verwendet; es wurden also nicht zwei separate Vliesstoffmaterialien verwendet.

In diesem Vergleichsversuch bestanden alle Lagen aus virgin PP, entsprechendes gilt aber auch für rezyklierte Materialien. Diese drei Lagen wurden zunächst mittels Druck im späteren Schweißbereich vorverdichtet, wobei das Vorverdichten nur auf einer Seite des anschließend zu faltenden und übereinanderzulegenden Materialstücks durchgeführt wurde.

Danach erfolgte das eigentliche Verschweißen mit den nachfolgend angegebenen Parametern. Beim Verschweißen lagen zwei Teilbereiche des zusammenhängenden Vliesstoffmaterials übereinander, wobei in dem oben oder unten liegenden Teilbereich (Vliesstoffmaterial) ein Bereich vorverdichtete war, in dem darunter bzw. darüber liegenden Teil, also in dem zweiten Vliesstoffmaterial, hingegen nicht.

| | | | | |
|---|---|---|---|---|
| Schweißzeit [ms] | 53 | 60 | 70 | 80 |
| Energieeintrag [J] | 30 | 40 | 50 | 60 |
| Druck [bar] | 1,8 | 1,8 | 1,8 | 1,8 |
| Festigkeit [N] | 14,2 | 18,1 | 27,8 | 54,4 |

Der Durchmesser des Vorschubzylinders der Sonotrode, auf den sich die Druckangabe bezieht, beträgt dabei 80 mm.

Man erkennt, dass schon bei einer Schweißzeit von 53 ms die Reißfestigkeit der Schweißverbindung bei 14,2 N liegt, was fast den für Atemschutzmasken typischerweise geforderten 15 N entspricht. Bereits mit 60 ms Schweißzeit und einem entsprechenden Energieeintrag von 40 J liegt man bei über 18 N Reißfestigkeit.

Im Vergleich dazu liegt die Schweißzeit für das Laminat ohne das Vorverdichten mit höherem Energieeintrag bei 320 ms:

| | |
|---|---|
| Schweißzeit [ms] | 320 |
| Energieeintrag [J] | 140 |
| Druck [bar] | 2 |
| Festigkeit [N] | 18,2 |

## Patentansprüche

1. Verfahren zur Herstellung einer Atemschutzmaske umfassend ein Filtermaterialstück aus einem luftdurchlässigen Material, mit den Schritten.
Bereitstellen eines ersten Vliesstoffmaterials,
bereichsweises Verdichten des ersten Vliesstoffmaterials,
Verschweißen des ersten Vliesstoffmaterials mit einem zweiten Vliesstoffmaterial im verdichteten Bereich.

2. Verfahren nach Anspruch 1, wobei vor dem Verschweißen der beiden Vliesstoffmaterialien das zweite Vliesstoffmaterial bereichsweise verdichtet wird.

3. Verfahren nach einem der vorangegangenen Ansprüche, wobei das Verdichten durch Ultraschallschweißen, thermisches Schweißen oder durch Druckbeaufschlagung erfolgt.

4. Verfahren nach einem der vorangegangenen Ansprüche, wobei das Verschweißen der Vliesstoffmaterialien mittels Ultraschallschweißen oder thermischem Schweißen erfolgt.

5. Verfahren nach einem der vorangegangenen Ansprüche, wobei die beiden Vliesstoffmaterialien zusammenhängend ausgebildet sind.

6. Verfahren nach einem der vorangegangenen Ansprüche, wobei das erste und/oder das zweite Vliesstoffmaterial einlagig oder mehrlagig ausgebildet sind.

7. Verfahren nach vorangegangenem Anspruch, wobei jede Lage des ersten bzw. zweiten Vliesstoffmaterials ein Vliesstoff oder ein Faservlies ist.

8. Verfahren nach einem der vorangegangenen Ansprüche, wobei das erste Vliesstoffmaterial und/oder das zweite Vliesstoffmaterial ein dreilagiges Laminat aus einem Meltblown-Vliesstoff zwischen zwei Lagen eines Spunbond-Vliesstoffs sind.

9. Verfahren nach einem der vorangegangenen Ansprüche, wobei das erste und/oder das zweite Vliesstoffmaterial Fasern aus einem frischen Kunststoff und/oder aus einem rezyklierten Kunststoff umfasst oder daraus besteht.

10. Verfahren nach einem der vorangegangenen Ansprüche, wobei das bereichsweise Verdichten und/oder das Verschweißen mit einer Sonotrode und einem Amboss durchgeführt werden, wobei die Sonotrode und/oder der Amboss eine glatte oder eine strukturierte Oberfläche aufweisen.

11. Verfahren nach einem der vorangegangenen Ansprüche, wobei vor dem Verschweißen bereichsweise, insbesondere auf dem verdichteten Bereich, ein thermisch reaktivierbarer Klebstoff aufgebracht wird.

12. Verfahren nach vorangegangenem Anspruch, wobei der Klebstoff mittels einer Rolle oder einer Düse aufgebracht wird.

13. Verfahren nach einem der vorangegangenen Ansprüche, weiterhin umfassend ein Anbringen eines Befestigungsbands an dem Filtermaterialstück, wobei das Anbringen ein Verschweißen des Befestigungsbands mit dem Filtermaterialstück umfasst.

14. Verfahren nach vorangegangenem Anspruch, wobei das Anbringen des Befestigungsbands ein bereichsweises Verdichten des Befestigungsbands und/oder des Filtermaterialstücks umfasst und das Befestigungsband mit dem Filtermaterialstück im verdichteten Bereich verschweißt wird.

15. Atemschutzmaske erhalten durch ein Verfahren nach einem der vorangegangenen Ansprüche.
